# EUROPEAN PATENT SPECIFICATION

(11) **EP 2 502 298 B1**
(45) Date of publication and mention of the grant of the patent: **14.11.2018**
(21) Application number: 10779440.6
(22) Date of filing: 16.11.2010
(51) Int. Cl.: H01M 8/0236, H01M 8/1226, H01M 8/2483, H01M 4/86, H01M 8/0256, H01M 8/026, H01M 8/0265, H01M 8/0271

(54) **FUEL CELL DEVICE**
BRENNSTOFFZELLENANORDNUNG
DISPOSITIF DE PILE À COMBUSTIBLE

(30) Priority: 16.11.2009 US 261573 P
(43) Date of publication of application: 26.09.2012
(73) Proprietor: Devoe, Alan, La Jolla, CA 92037 (US); Devoe, Lambert, San Diego, CA 92122 (US)
(72) Inventor: Devoe, Alan, La Jolla, CA 92037 (US); Devoe, Lambert, San Diego, CA 92122 (US)
(74) Representative: Findlay, Alice Rosemary
(86) International application number: PCT/US2010/056860
(87) International publication number: WO 2011/060426

(56) References cited:
- EP-A1- 1 447 871
- WO-A2-03/081703
- WO-A2-2007/056518
- US-A1- 2004 086 767
- US-A1- 2008 289 180
- US-A1- 2009 226 781
- US-B1- 6 444 339

## Description

### FIELD OF THE INVENTION

This invention relates to fuel cell devices and systems, and methods of manufacturing the devices, and more particularly, to a solid oxide fuel cell device.

### BACKGROUND OF INVENTION

Ceramic tubes have found a use in the manufacture of Solid Oxide Fuel Cells (SOFCs). There are several types of fuel cells, each offering a different mechanism of converting fuel and air to produce electricity without combustion. In SOFCs, the barrier layer (the "electrolyte") between the fuel and the air is a ceramic layer, which allows oxygen atoms to migrate through the layer to complete a chemical reaction. Because ceramic is a poor conductor of oxygen atoms at room temperature, the fuel cell is operated at 700°C to 1000°C, and the ceramic layer is made as thin as possible.

Early tubular SOFCs were produced by the Westinghouse Corporation using long, fairly large diameter, extruded tubes of zirconia ceramic. Typical tube lengths were several feet long, with tube diameters ranging from 1/4 inch to 1/2 inch. A complete structure for a fuel cell typically contained roughly ten tubes. Over time, researchers and industry groups settled on a formula for the zirconia ceramic which contains 8 mol% Y₂O₃. This material is made by, among others, Tosoh of Japan as product TZ-8Y.

Another method of making SOFCs makes use of flat plates of zirconia, stacked together with other anodes and cathodes, to achieve the fuel cell structure. Compared to the tall, narrow devices envisioned by Westinghouse, these flat plate structures can be cube shaped, 6 to 8 inches (15.24 to 20.32cm) on an edge, with a clamping mechanism to hold the entire stack together.

A still newer method envisions using larger quantities of small diameter tubes having very thin walls. The use of thin walled ceramic is important in SOFCs because the transfer rate of oxygen ions is limited by distance and temperature. If a thinner layer of zirconia is used, the final device can be operated at a lower temperature while maintaining the same efficiency. Literature describes the need to make ceramic tubes at 150µm or less wall thickness.

An SOFC tube is useful as a gas container only. To work it must be used inside a larger air container. This is bulky. A key challenge of using tubes is that you must apply both heat and air to the outside of the tube; air to provide the O₂ for the reaction, and heat to accelerate the reaction. Usually, the heat would be applied by burning fuel, so instead of applying air with 20% O₂ (typical), the air is actually partially reduced (partially burned to provide the heat) and this lowers the driving potential of the cell.

An SOFC tube is also limited in its scalability. To achieve greater kV output, more tubes must be added. Each tube is a single electrolyte layer, such that increases are bulky. The solid electrolyte tube technology is further limited in terms of achievable electrolyte thinness. A thinner electrolyte is more efficient. Electrolyte thickness of 2 µm or even 1 µm would be optimal for high power, but is very difficult to achieve in solid electrolyte tubes. It is noted that a single fuel cell area produces about 0.5 to 1 volt (this is inherent due to the driving force of the chemical reaction, in the same way that a battery gives off 1.2 volts), but the current, and therefore the power, depend on several factors. Higher current will result from factors that make more oxygen ions migrate across the electrolyte in a given time. These factors are higher temperature, thinner electrolyte, and larger area.

Fuel utilization is a component of the overall efficiency of the fuel cell. Fuel utilization is a term that can describe the percent of fuel that is converted into electricity. For example, a fuel cell may only convert 50% of its fuel into electricity, with the other 50% exiting the cell un-used. Ideally, the fuel utilization of a fuel cell would be 100%, so that no fuel is wasted. Practically, however, total efficiency would be less than 100%, even if fuel utilization was 100%, because of various other inefficiencies and system losses.

A challenge for fuel utilization at the anode is to move molecules of fuel into the pores of the anode. Another challenge is to move the waste products, i.e., water and CO₂ molecules, out of the pores of the anode. If the pores are too small, then the flow of fuel inward and waste-products outward will be too slow to allow high fuel utilization.

An analogous condition exists for the cathode. Because air is only 20% oxygen, and has 80% nitrogen, there is a challenge to move oxygen into the pores and N₂ out of the pores. Collectively, utilization of the fuel and air input to the device may be referred to as "gas utilization."

One problem for gas utilization is that air and fuel can pass through the flow paths past the porous anodes and cathodes without the molecules ever entering the pores. The "path of least resistance" would lead a molecule to bypass the most important part of the fuel cell.

Additionally, if the gas molecules can't get into and out of the anode and cathode, then the fuel cell will not achieve its maximum power. A lack of fuel or oxygen at the anodes or cathodes essentially means that the fuel cell is starved for chemical energy. If the anode and/or cathode are starved for chemicals, less power will be generated per unit area (cm²). This lower power per unit area gives lower total system power.

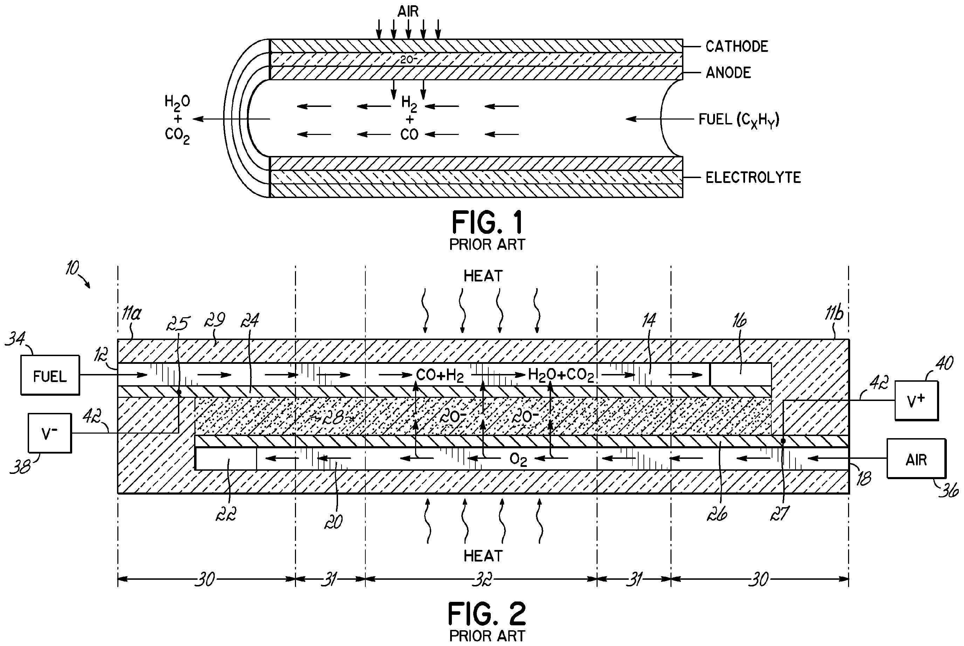

In a tubular fuel cell device, such as that shown in FIG. 1 where the anode lines the inside of the tube and the cathode forms the outer surface with the electrolyte therebetween, it is wishful thinking to expect high utilization of fuel. The inside diameter of the tube, which forms the fuel passage, is very large when compared to the thickness of the anode. Anode thicknesses may be on the order of 50-500 nm, whereas tube diameters may be on the order of 4-20 mm. Thus, there is a high likelihood of fuel molecules passing through the large fuel passage without ever entering the pores of the anode. An alternate geometry for the tube is to have the anode on the outside of the tube. In that case, the problem could be worse because the fuel is contained within the furnace volume, which is even larger than the volume within the tube.

Within a multilayer SOFC, such as the Fuel Cell Stick™ depicted in FIG. 2, fuel utilization can be higher because the flow path for the gas can be smaller. By way of example, both the anodes and fuel paths can be made to a thickness of 50 nm, and this similarity in thickness, where the ratio of thickness can be near 1:1 (or a bit higher or lower, such as 2:1 or 1:2) can give a more optimal chance of molecule flow into and out of pores.

However, as the electrolyte is made thinner, such that the power per cm² (W/cm²) goes up (or as the other elements of the structure are optimized to give higher power per area), the production of waste H₂O and CO₂ within the pores will increase. So, as power per area and volume increases, there is an increased need to exchange the gases in the porous structure more quickly.

Therefore, there is a need to better direct the gases into the pores and to flush waste products out of the pores. Higher utilization and/or better flow through the pores will give better system performance.

EP1447871 discloses a fuel cell with a catalytic combustor instead of a seal. The catalytic combustor is positioned to come in contact with a fuel after the fuel has traversed a path over an intended electrode and the fuel is catalytically combusted before the fuel can come in contact with an unintended electrode. US2009/226781 A1 discloses another fuel cell device known from prior art.

### SUMMARY OF THE INVENTION

The present invention is defined by the subject-matter of appended claim 1 and provides a fuel cell device in which the input gas passages are separate from the exhaust gas passages. To that end, the fuel cell device comprises a solid ceramic support structure having at least one active cell therein, with each active cell comprising a first porous electrode and a second porous electrode separated by an electrolyte layer that is monolithic with the solid ceramic support structure and each of the first and second porous electrodes have a surface that forms an interface with the electrolyte layer. One or more first and second gas input passages extend within the respective first and second porous electrodes, within the electrolyte layer, and/or at the surface that forms the interface between the respective first and second porous electrodes and the electrolyte layer. Additionally, one or more first and second exhaust passages are spaced apart from the respective one or more first and second input passages, and-extend-within the respective first and second porous electrodes and/or at a surface thereof opposite the surface that forms the interface with the electrolyte layer. With this structure, the gases are adapted to flow from inlets in the solid ceramic support structure through the one or more first and second gas input passages to pores of the first and second porous electrodes, then through the pores of the first and second porous electrodes to the one or more first and second exhaust passages, and then through the one or more first and second exhaust passages to outlets in the solid ceramic support structure.

### BRIEF DESCRIPTION OF THE INVENTION

The accompanying drawings, which are incorporated in and constitute a part of this specification, illustrate embodiments of the invention and, together with a general description of the invention given above, and the detailed description given below, serve to explain the invention.
FIG. 1 is a schematic view of a tubular solid oxide fuel cell device of the prior art.
FIG. 2 is a schematic side cross-sectional view of a solid oxide Fuel Cell Stick™ device of the prior art.
FIG. 3A is a schematic side cross-sectional view of an embodiment of the invention having separated gas input and exhaust passages.
FIG. 3B is a partial schematic end cross-sectional view taken along line 3B-3B of FIG. 3A.
FIGS. 4A and 4B are partial schematic perspective views depicting separate input and exhaust passages positioned at the surfaces of the anode, according to embodiments of the invention.
FIG. 5 is a schematic (end or side) cross-sectional view depicting separate input and exhaust passages positioned within the electrodes, according to an embodiment of the invention.
FIGS. 6A-6B depict, in schematic perspective and side cross-sectional views, respectively, separate input and exhaust passages positioned within the anode, according to an embodiment of the invention, and FIG. 6C depicts in schematic end cross-sectional view the gas flow through the anode according to the embodiment of FIGS. 6A-6B.
FIGS. 7A-7B depict, in schematic perspective and side cross-sectional views, respectively, separate top and bottom input passages and central exhaust passages positioned within the anode, according to another embodiment of the invention, and FIG. 7C depicts in schematic end cross-sectional view the gas flow through the anode according to the embodiment of FIGS. 7A-7B.
FIGS. 8A-8B are schematic (end or side) cross-sectional and perspective views, respectively, depicting separate top and bottom input passages positioned at the surface of the anode and central exhaust passages positioned within the anode, according to another embodiment of the invention.
FIGS. 9A-9B are schematic (end or side) cross-sectional and perspective views, respectively, depicting use of fibers for forming the passages within the anode, and FIG. 9C is a schematic cross-sectional view depicting use of fibers for forming the passages at the surfaces of the anode, according to embodiments of the invention.
FIGS. 10A-10B are partial side cross-sectional and end cross-sectional views, respectively, depicting a combination of individual spaced channels and large area channels for the separate input and exhaust passages according to an embodiment of the invention.
FIGS. 11A-11B are partial side cross-sectional and end cross-sectional views, respectively, depicting a combination of individual spaced channels and large area channels for the separate input and exhaust passages according to another embodiment of the invention.
FIG. 12 is a schematic cross-sectional view of a method of forming a conductor-lined gas passage in an anode using fibers.
FIGS. 13A and 13B depict alternative embodiments for placing a conductor on the fibers.
FIGS. 14A-14C depict in perspective, top and cross-sectional views, respectively, an embodiment of the invention having separated gas input and exhaust passages along the same plane.
FIGS. 15-17 depict in schematic cross-sectional view and top views, respectively, variations in the shapes and patterns of the input and exhaust passages according to several embodiments.
FIG. 18 depicts in schematic perspective view electrolyte layers with an embedded gas channel and vias connecting to an anode layer according to an embodiment of the invention.
FIG. 19 depicts in schematic perspective view a ceramic sheet with a via pattern.
FIG. 20 depicts in schematic perspective view a ceramic sheet with a pattern of sacrificial gap-forming material thereon according to an embodiment of the invention.
FIG. 21 depicts in schematic cross-sectional view the assembly of ceramic, anode, and cathode layers with physical structures, sacrificial gap-forming materials, and filled vias for forming a device according to embodiments of the invention.
FIG. 22 depicts in schematic cross-sectional view the resulting device from the assembly of FIG. 21 having buried input channels in the electrolyte feeding the anodes and cathodes through vias and exhaust passages in the anodes and cathodes, according to embodiments of the invention.

### DETAILED DESCRIPTION

One embodiment of the invention is directed to fuel cell structure for forcing reactant gas through a porous anode or cathode, in order to make use of the fresh reactants, while flushing out the waste products. To that end, the fuel cell design separates the gas input paths to the pores from the waste output paths from the pores. Without wishing to be bound by theory, it is believed that the presence of the waste products on the fuel side (H₂O, CO₂) reduces the potential (the voltage that is across the electrolyte) of the cell, so that better removal of CO₂ and H₂O will give higher voltages and corresponding higher outputs.

Reference may be made to the following publications by the same inventors, which describe various embodiments of a multilayer Fuel Cell Stick™device 10 (et al.): U.S. Patent Application Publication Nos. 2007/0104991, 2007/0105003, 2007/0111065, 2007/0105012, 2008/0171237, 2007/0264542 and 2009/0123810; and PCT Publication Nos. WO2007/056518, WO2007/134209 and WO2008/141171. The inventive structures and/or concepts disclosed herein may be applied to one or more of the embodiments disclosed in the above-reference published applications.

In U.S. Patent Application Publication No. 2009/0123810 (e.g., FIGS. 115A-118), the use of carbon fibers is described for forming the gas passages through a porous anode/cathode (for example, the gas passages 14,20 of FIG. 1 reproduced herein as FIG. 2). However, the input and output passages are not separated (i.e., each gas has a single passage with input at one end and output at the other end), which may result in a steady accumulation of H₂O and CO₂ in the gas as it flows down the passage to exit the device.

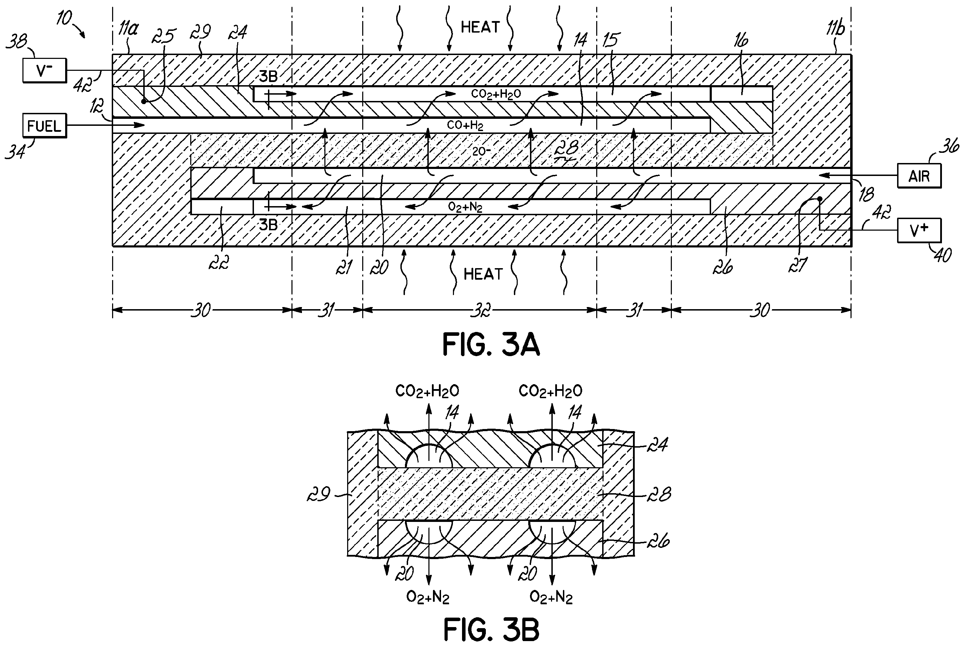

In accordance with various embodiments of the present invention, fuel utilization can be improved by supplying the fuel in a fuel passage positioned at or near the interface between of the porous anode and the electrolyte, whereby the fuel can diffuse through the pores until it reaches an exit path. Likewise, the oxidizing gas (e.g., air) can be supplied in an oxidizer passage at or near the interface between of the porous cathode and the electrolyte, whereby the air can diffuse through the pores until it reaches an exit path. This concept, further explained below and depicted in FIGS. 3A and 3B, can enable very high utilization. Like reference numerals are used throughout the Figures to refer to like parts.

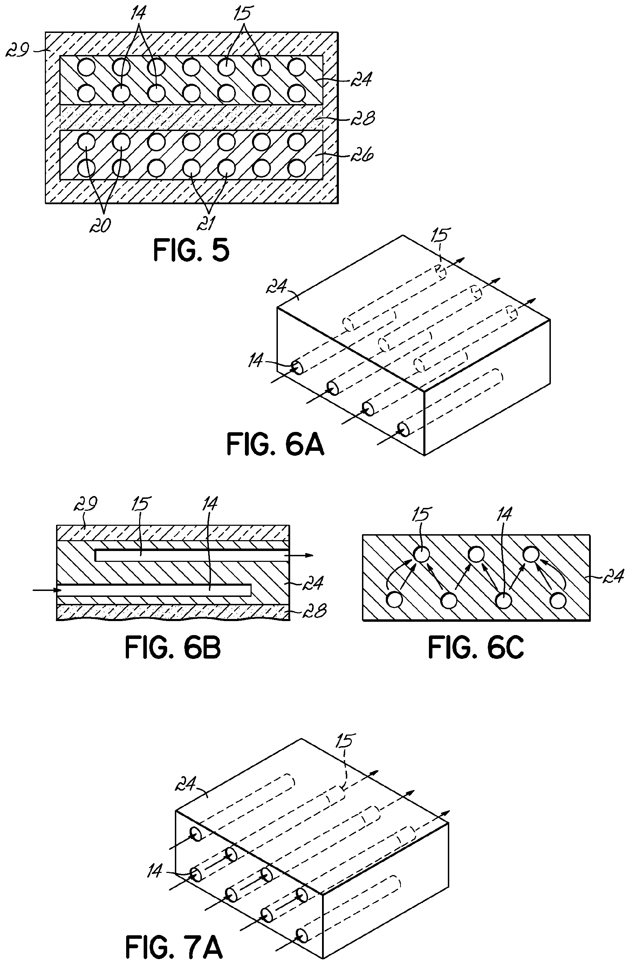

In accordance with an embodiment of the present invention, Fig. 3A depicts in side cross-sectional view a basic Fuel Cell Stick™device 10 of the solid oxide type having input flow passages separated from output flow passages, i.e., exhaust passages. Device 10 has a single anode layer 24 (e.g., anode) and a single cathode layer 26 (e.g., cathode) with an electrolyte layer 28 (e.g., electrolyte) therebetween, wherein the device 10 is monolithic. The Fuel Cell Stick™device 10 includes a fuel inlet 12 coupled to a fuel input passage 14 extending along the surface of the anode 24 at its interface with the electrolyte 28 and a fuel outlet 16 coupled to a fuel exhaust passage 15 extending along an opposite surface of the anode 24. Device 10 further includes an air inlet 18 coupled to an air input passage 20 extending along the surface of the cathode 26 at its interface with the electrolyte 28 and an air outlet 22 coupled to an air exhaust passage 21 extending along an opposite surface of the cathode 26. The fuel input passage 14 and the air input passage 20 are depicted in an opposing and parallel relation, with the flow of fuel from fuel supply 34 through the fuel input passage 14 being in a direction opposite to the flow of air from air supply 36 through air input passage 20. However, the inputs may both be in the same end of the device 10 with the resulting flow of gases in the same direction, for example, as disclosed in FIGS. 6A-6B of U.S. Patent Application Publication No. 2009/0123810.

The remainder of the Fuel Cell Stick™device 10 comprises ceramic 29, which may be of the same material as the electrolyte layer 28 or may be a different but compatible ceramic material. Ceramic 29 provides the interior support structure of the device 10 and is monolithic with the electrolyte 28. The electrolyte layer 28 is considered to be that portion of the ceramic lying between opposing areas of the anode 24 and cathode 26, as indicated by dashed lines. It is in the electrolyte layer 28 that oxygen ions pass from the air input passage 20 to the fuel input passage 14.

As shown in FIG. 3A, O₂ from the air supply 36 travels through the air passage 20 and is ionized by the cathode 26 to form 2O⁻, which travels or diffuses through the electrolyte layer 28 and into the fuel input passage 14 adjacent the anode 24 where it reacts with fuel, for example, a hydrocarbon, from the fuel supply 34 to first form CO and H₂ and then to form H₂O and CO₂. The H₂O and CO₂ travel or diffuse through the pores of the anode 24 to the fuel exhaust passage 15 and are then exhausted from the device 10 via the fuel outlet 16. Excess O₂ as well as N₂ from the air input passage 20 travel or diffuse through the pores of the cathode 26 to the air exhaust passage 21and are then exhausted from the device 10 via the air outlet 22. While FIG. 3A depicts the reaction using a hydrocarbon as the fuel, the invention is not so limited. Any type of fuel commonly used in SOFCs or other similar fuel cell device may be used in the present invention. Fuel supply 34 may be any hydrocarbon source or hydrogen source, for example. Methane (CH₄), propane (C₃H₈) and butane (C₄H₁₀) are examples of hydrocarbon fuels.

For the reaction to occur, heat must be applied to the Fuel Cell Stick™device 10. In accordance with an embodiment of the invention, the length of the Fuel Cell Stick™ device 10 is long enough that the device can be divided into a hot zone 32 (or heated zone) in the center of the device 10 and cold zones 30 at each end 11a and 11b of the device 10. Between the hot zone 32 and the cold zones 30, a transition zone 31 exists. The hot zone 32 is exposed to a heat source and will typically operate above 400°C. In exemplary embodiments, the hot zone 32 will operate at temperatures > 600°C, for example > 700°C. The cold zones 30 are not exposed to a heat source, and advantageously are shielded from the heat source, such as by a thermal insulator, and due to the length of the Fuel Cell Stick™ device 10 and the thermal property advantages of the ceramic materials, heat dissipates outside the hot zone 32, such that the cold zones 30 have a temperature < 300°C. It is believed that heat transfer from the hot zone 32 down the length of the ceramic 29 to the ends 11a, 11b in the cold zone 30 is slow, whereas the heat transfer from the ceramic material outside the hot zone 32 into the air is relatively faster. Thus, most of the heat inputted in the hot zone 32 is lost to the air (mainly in the transition zone 31) before it can reach the ends 11a, 11b in the cold zone 30. In exemplary embodiments of the invention, the cold zones 30 have a temperature < 150°C. In a further exemplary embodiment, the cold zones 30 are at room temperature. The transition zones 31 have temperatures between the operating temperature of the hot zone 32 and the temperature of the cold zones 30, and it is within the transition zones 31 that the significant amount of heat dissipation occurs.

Because the dominant thermal expansion is along the length of the Fuel Cell Stick™device 10, and is therefore essentially one-dimensional, fast heating of the center is permitted without cracking. In exemplary embodiments, the length of the device 10 is at least 5 times greater than the width and thickness of the device. In further exemplary embodiments, the length of the device 10 is at least 10 times greater than the width and thickness of the device. In yet further exemplary embodiments, the length of the device 10 is at least 15 times greater than the width and thickness of the device. In addition, in exemplary embodiments, the width is greater than the thickness, which provides for greater area. For example, the width may be at least twice the thickness. By way of further example, a 0.2 inch (0.508 cm) thick Fuel Cell Stick™ device 10 may have a width of 0.5 inch (1.27 cm). It may be appreciated that the drawings are not shown to scale, but merely give a general idea of the relative dimensions.

Electrical connections to the anode 24 and cathode 26 are made in the cold zones 30 of the Fuel Cell Stick™ device 10. In an exemplary embodiment, the anode 24 and the cathode 26 will each be exposed to an outer surface of the Fuel Cell Stick™ device 10 in a cold zone 30 to allow an electrical connection to be made. A negative voltage node 38 is connected via a wire 42, for example, to the exposed anode portion 25 and a positive voltage node 40 is connected via a wire 42, for example, to the exposed cathode portion 27. Because the Fuel Cell Stick™ device 10 has cold zones 30 at each end 11a, 11b of the device, low temperature rigid electrical connections can be made, which is a significant advantage over the prior art, which generally requires high temperature brazing methods to make the electrical connections.

While FIG. 3A depicts a device 10 having opposing cold zones 30, it may be understood that the device 10 may have a single cold zone 30 at one end 11a and the hot zone 32 at the opposing end 11b with the transition zone 31 therebetween, for example, where the inlets 12, 18 are in the same end of the device 10 with the resulting flow of gases in the same direction, for example, as disclosed in FIGS. 6A-6B of U.S. Patent Application Publication No. 2009/0123810.

An apparent drawback of Fig. 3A is that it appears that the anode 24 and cathode 26 are not touching the electrolyte 28 along the majority of their lengths. Fig. 3B is a partial schematic end cross-sectional view taken along line 3B-3B of FIG. 3A, i.e., with the view rotated 90°, showing that actually only a portion of the electrode-electrolyte interfaces are sacrificed. The fuel input passage 14, air input passage 20 and exhaust passages 15,21 can be formed using any of the methods previously described in the published applications cited above, for example, wires that are subsequently pulled out, organic materials that burn away, carbon fibers, etc.

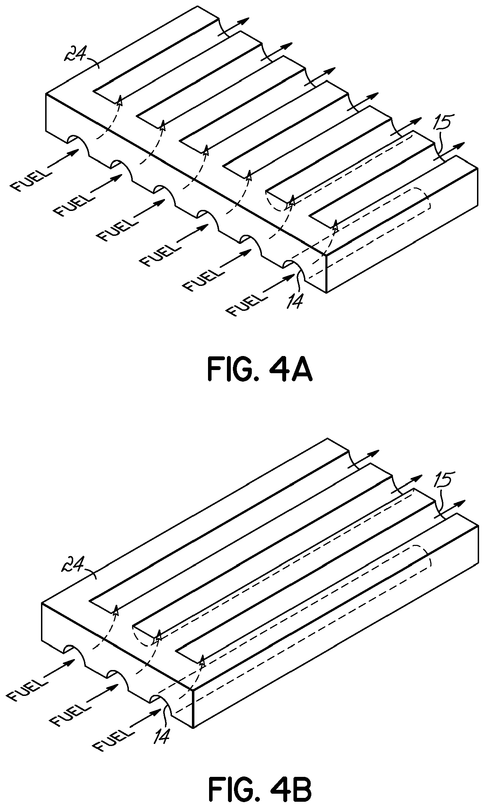

An optimal design according to one embodiment may include a plurality of fuel input passages 14 (and/or air input passages 20) that enter at one side of a short, wide anode 24 (or cathode 26) and fuel exhaust passages 15 that exit the opposing side, such as depicted in FIG. 4A in schematic perspective view showing only the anode 24, fuel input passages 14 and fuel exhaust passages 15 of device 10. This design is expected to give the minimum resistance to flow. It is also possible, though less optimal, to orient the anode 24 (or cathode 26) the other way, as depicted in FIG. 4B in schematic perspective view.

As mentioned above, there is some sacrifice of active area by incorporating the input passages 14, 20 at the surface of the electrolyte 28. This can be mitigated by incorporating the input passages 14 and/or 20 near the electrolyte 28, but still within the anode 24 and/or cathode 26, as shown in schematic cross-sectional view in FIG. 5. In this way, there is still maximum contact between the electrolyte 28 and the anode 24 and/or cathode 26. Optionally, the exhaust passages 15,21 may also be incorporated within the anode 24/cathode 26, as shown.

In the embodiments depicted in FIGS. 3A-5, device 10 distinguishes between fresh gases and waste gases (or between gases that have more un-reacted materials versus more reacted materials) due to the design/positioning of the gas pathways. For a gas molecule to transition between the input passages 14 and 20 and the respective exhaust passages 15 and 21, the gas molecule must travel through the pores of the respective anode 24 and cathode 26, which is distinct from the prior art where gases merely pass near the anode or cathode, and convert more gradually from fresh gas to waste gas along the same flow path.

In FIGS. 6A-11B, various designs are further depicted that implement the concept described above, i.e., separation between fresh gases and waste gases. An anode 24 may be used to simplify the explanation of the embodiments, but the embodiments are equally applicable to a cathode 26 or both the anode 24 and cathode 26.

FIGS. 6A-6B depict, in schematic perspective and side cross-sectional views, respectively, an anode 24 with input passages 14 and exhaust passages 15 embedded within the anode 24 at a spaced apart distance (i.e., not physically touching) to achieve the separation between the inputted fresh gas and the outputted waste gas. As shown, the input passages 14 are positioned near (but not touching) the bottom surface of the anode 24 and the exhaust passages 15 are positioned near (but not touching) the top surface of the anode 24, providing maximum adherence of the surfaces of the anode 24 to the adjacent ceramic material of the electrolyte 28 and surrounding ceramic 29, and providing maximum travel distance of the gas molecules through the pores of the anode 24. The exhaust passages 15 may be aligned with the input passages 14, as shown in FIG. 5, or they may be offset as shown in schematic end cross-sectional view in FIG. 6C. When offset, the gas molecules can travel through the anode 14 to either of the adjacent offset exhaust passages 15, as illustrated by the arrows.

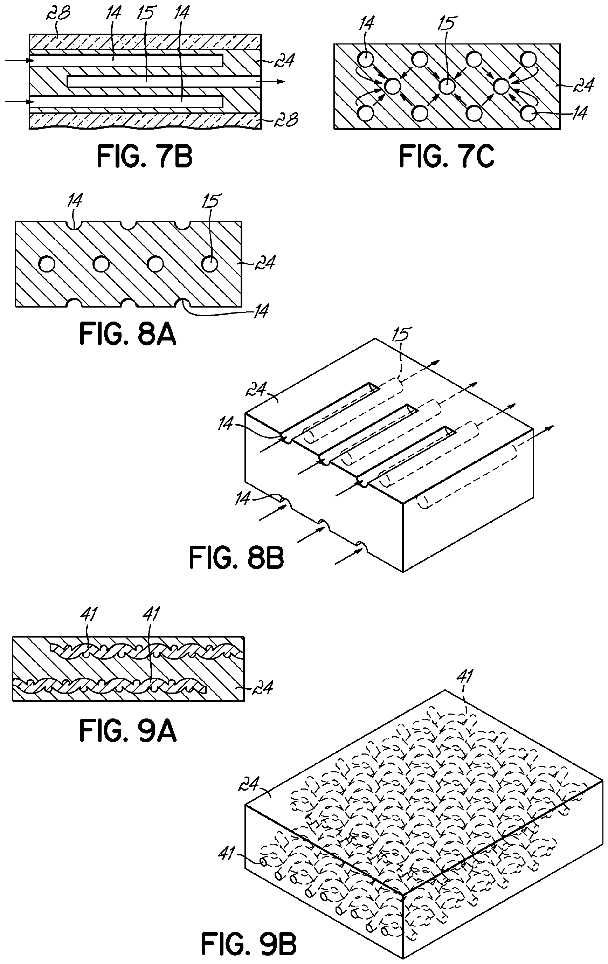

FIGS. 7A-7C depict another embodiment similar to that of FIGS. 6A-6C, but with two sets of input passages 14 positioned near (but not touching) the top and bottom surfaces of the anode 24, and an intermediate set of exhaust passages 15 therebetween at or near the center of the anode 24. This design can easily serve two electrolyte layers 28 above and below the anode 24, as shown. This embodiment provides a shorter travel distance of the gas molecules through the pores of the anode 24. It may be appreciated that variations in the number of input and exhaust passages 14,15 may be utilized, both within a single set and as to the number of sets of each.

FIGS. 8A-8B depict in schematic cross-sectional and perspective views, respectively, a combination of the configurations of FIGS. 4A and 7A in which the input passages 14 are positioned along the top and bottom surfaces of anode 24, and so would touch the electrolyte 28 also, and the exhaust passages 15 are positioned within the anode 24. The reverse is also contemplated in which the exhaust passages 15 are on the surfaces and the input passages 14 are within the anode 24.

The gas passages (14,15,20,21) can be formed in a variety of ways. Carbon fibers can be used, but also organic fibers, polymer strands, or even materials that would co-fire with the electrode and then be leached out later, for example a metal that would be leached out in acid.

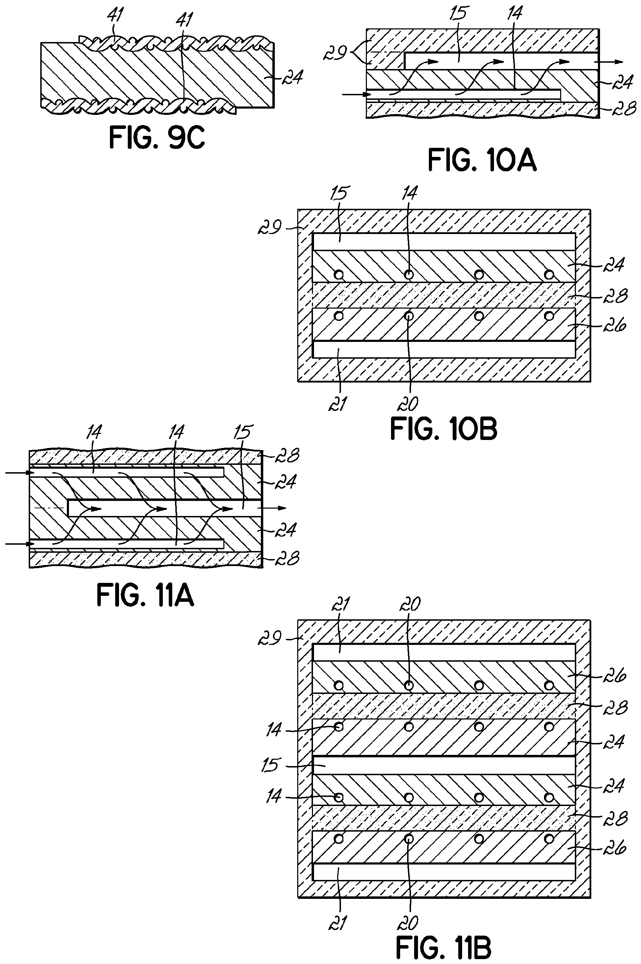

FIGS. 9A-9B depict in schematic cross-sectional and perspective views, respectively, the use of fiber mats or cloths 41 to make the gas passages 14,15 within the anode 24, and FIG. 9C depicts in schematic cross-sectional view the use of fiber mats or cloths 41 to make the gas passages 14,15 at the surfaces of the anode 24. The fibers 41 can either be randomly oriented or precisely oriented (uni-directionally or bi-directionally woven, for example). The fiber material would commonly have a sheet form within the electrode, as opposed to the distinct, spaced-apart individual passages of FIGS. 6A-8B, although it is contemplated that the sheet could be cut into strips and placed in spaced-apart fashion to create the spaced-apart individual passages.

FIG. 10A depicts in partial side cross-sectional view the use of individual channels or micro-channels for the inlet passages 14 for the fuel and a large pathway for the exhaust passage 15, which can be the full area at or near the surface of the anode 24. The large pathway for the exhaust passage 15 can be formed with the "gap tape" described as being used to make the passages in the Fuel Cell Stick™ devices described in the related published applications reference above and incorporated by reference herein. FIG. 10B depicts in end cross-sectional view the embodiment of FIG. 10A with both the anode 24 and cathode 26 having large pathways for the exhaust passages 15,21 at the interface with the surrounding ceramic 29 and individual, spaced-apart input passages 14, 20 within the respective anode 24 and cathode 26 near the respective interfaces with the electrolyte 28.

FIGS. 11A and 11B are similar to FIGS. 10A and 10B, but the anode 24 is depicted serving two electrolytes 28 at the same time with the large pathway for the exhaust passage 15 splitting the anode 24 into two spaced portions along a portion thereof. FIG. 11B further depicts two cathodes 26 having the construction described above for FIG. 10B.

The embodiments shown and described herein are understood to apply to fuel cell devices regardless of scale, such that the present invention contemplates the use of "micro" passages or "nano" passages, for example. Further, the passages may be formed using any number of materials and methods of fabrication, including a physical wire or filament, which can even be physically removed in the green state; carbon fibers; cotton or polymer threads; polymer filaments; various sacrificial materials; or various other materials and processes.

A particular feature of this inventive design and method, as shown for example in FIGS. 7A-9C, is that the fuel cell device can be made physically denser even in the region of the anode and cathode gaps. In embodiments described in the published applications referenced above and incorporated herein, there are large open gaps for gas flow, such that the strength of the device relies upon the physical structure beside those gaps. In the embodiments described herein above, the physical strength of the device can be carried in part by the electrodes because the anode and cathode each give a continuous structure between the materials above and below them.

The formation of small passages within an anode or cathode provides an opportunity to also incorporate conductors (i.e., current collectors) into the anode or cathode. The small passages 14,15,20,21 shown in FIGS. 3A-11B can be lined with a highly conductive material to serve as a low resistance pathway.

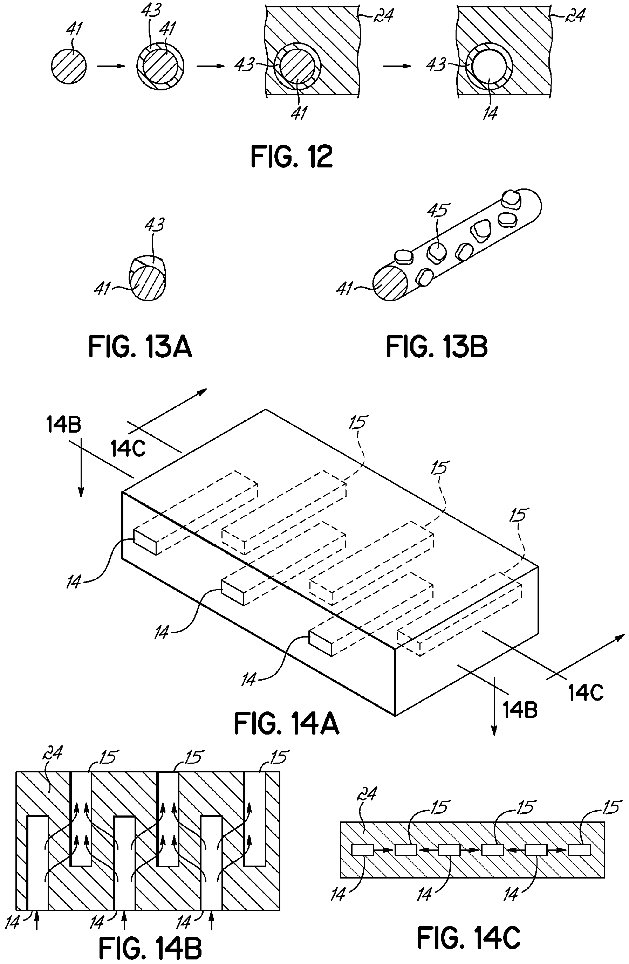

In one embodiment, depicted in schematic cross-section in FIG. 12, the fiber mat or cloth 41 or other physical structure used to form the passages (e.g., input passage 14, shown, or 20, or exhaust passage 15 or 21) is sputtered or plated with conductive metal, for example, and then placed into the electrode material (e.g., anode 24, shown, or cathode 26). Platinum, nickel or copper could be used, for example, as the conductive metal. The invention is not limited to conductive metals, however, as any conductive material can be used to form the conductors, such as precious metals (Pt, Pt, etc.); oxidizing metals (Ni, Cu, etc.); conductive ceramics (LSM, etc.), etc. After the fiber 41 disappears, the passage 14 (or 15,20,21) surrounded by a conductor 43 is left within the porous electrode (anode 24 or cathode 26). The conductor 43 must be porous so that the passage 14 (or 15,20,21) will emit gas into, or accept gas from, the porous electrode (anode 24 or cathode 26). This porosity can be accomplished in many ways, one of which is to apply the conductive material in a thin manner such that surface tension pulls the metal together, thereby opening pores. In the case of nickel or copper, the atmosphere could be made reducing early in the process, so that the metal sinters as a metal, and then the atmosphere could be made oxidizing, for optimal final sintering. During use at an anode 24, the NiO or CuO could again reduce.

According to another embodiment, the fibers 41 could be coated (sputter, plating, or another method) so that only one side of the fiber 41 is coated, as shown in cross-section in FIG. 13A. This partial coating to form conductor 43 would provide more optimal gas diffusion into the electrode (anode 24 or cathode 26), while allowing conductivity to be optimized through greater thickness of the conductor material. One way to deposit conductor 43 on just one side of the fibers (individual fibers; or mat; or woven fibers, or others) is to sputter from one side only. Another way is to sputter a seed layer from one side, then plate additional thickness.

An alternate approach to adding conductors to the fibers 41 is to coat them with conductive particles 45, as shown in schematic perspective view in FIG. 13B. This can be done, for example, by applying a particle-containing slurry or paste to the fibers 41. After sinter, these conductive particles 45 would be concentrated on the walls of the passages 14 (or 15,20,21), thereby acting as a current collectors.

By incorporating the current collectors with the formation of the passages 14,15,20,21 as discussed above and depicted in FIGS. 12-13B, the process of creating an anode 24 or cathode 26 with a current collector is simplified because the addition of a separate layer in the build-up of the fuel cell device 10 is no longer needed. The total thickness of the electrodes (anode 24, cathode 26) is reduced, which increases the density of the device 10. By applying a thin, dense coating of Pt, for example, to the passage-forming structure, a more cost effective use of the material can be obtained.

When forming the current collectors in the passages, the coated fibers can be connected to a fully conductive region at the edge of the anode 24 or cathode 26 for interconnect to another cell in the device 10. This can be accomplished, for example, by extending the fibers 41 into the conductive interconnect region.

In yet another embodiment, fibers 41 could also be formed for the purpose described above with the conductive materials embedded into the fibers. This could add complication to the manufacture of the device 10 because special fibers would be needed, but they would nonetheless accomplish the same goal of providing conductive material into the passages to serve as current collectors.

Referring back to FIGS. 3A-11B, a distinguishing characteristic of these designs is that the direction of a substantial portion of the flow of gas is perpendicular to the plane of the electrolyte 28 and plane of the anode 24/cathode 26. Described further, the area of an anode 24 is very large in the X-Y plane, but this design allows the gas to flow in the Z direction, i.e., from the input passages 14,20 in the Z direction to the exhaust passages 15,21.

In an alternative embodiment for separation of the input and waste gases, a side-by-side arrangement for the input and exhaust paths essentially restricting flow to the X-Y plane is also contemplated. In this design, depicting an anode 24 in schematic perspective view (X-Y-Z planes) in FIG. 14A, schematic top view (X-Y planes) in FIG. 14B, and schematic cross-sectional view along line 14C-14C of FIG. 14A (X-Z planes), the input passages 14 and exhaust passages 15 are on the same level or X-Y plane within the anode 24 such that the gases flow in the passages 14,15 in the Y direction (or X direction) and flow through the pores of the anode 24 generally in the X direction (or Y direction).

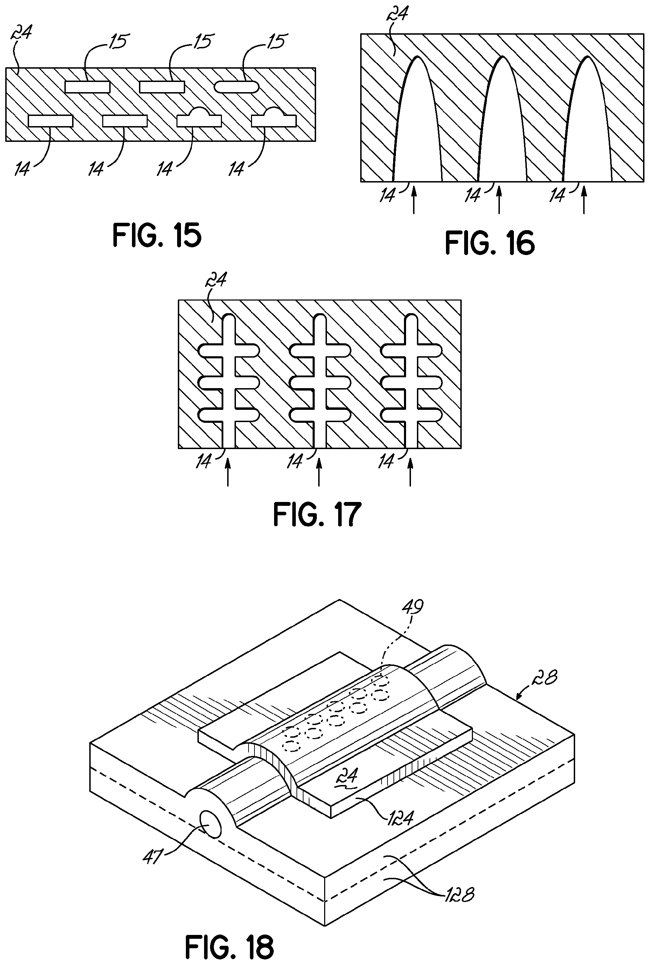

In addition to varying the direction of flow, the shape of the passages 14,15,20,21 can also be varied, either to accommodate the materials or structures used to build the device 10 or the alter the flow rate and/or resistance to flow. FIG. 5, for example, depicts circular passages 14,15,20,21, which by way of example could be formed using wires 42 that are pulled out of the structure after lamination and/or sintering. FIG. 15 depicts in schematic cross-section several different shapes for passages 14,15 in an anode 24, including rectangular passages 14,15 that are wider than they are tall, a passage 15 that is oval, and passages 14 that have a vertical dimension that is asymmetric with other features of the pattern, which can help maintain flow rate as oxygen is disappearing. FIG. 16 shows, in top down view on an anode 24, passages 14 that become narrower as they progress inward, and thus the flow resistance increases along the passages 14. FIG. 17 shows, in top down view on an anode 24, passages 14 with branches to assist in spreading the flow to additional pores in the anode 24. Thus, the width, thickness and contour of the passages 14,15,20,21 can be varied, as desired.

According to embodiments of the invention, the input and exhaust passages 14,15,20,21 of any of the various shapes and patterns can be created within the anode 24 or cathode 26 by screen printing organic material. This material can be a polymer dissolved in solvent, for example, and can be filled with other decomposable fillers if desired. One advantageous method is to use an ink vehicle without any filler. By using a screen printing technique, or some other similar process such as direct-writing or dispensing, the shape and pattern of the passages 14,15,20,21 can be precisely varied to give desired flow properties, and may provide better flow properties compared to using fibers. In addition, combinations of techniques can be used, such as depositing a rectangular gap-forming pattern, and situating wires 42 along the centers of the rectangles, partially recessed therein, where after the wires 42 are removed and the gap-forming material burned out, the asymmetric pattern shown in FIG. 15 is achieved. Printed or deposited gap formers and/or wires 42 or other physical structures can be used to create any of the patterns or shapes shown in Figs. 3A-17, including patterns on the surface of an anode 24/cathode 26, or multiple levels within the anode 24/cathode 26. In addition, the input passages 14,20 do not have to be the same size or shape as the exhaust passages 15,21, and not all input passages 14,20 (or exhaust passages 15,21) must be the same as each other.

According to another embodiment of the invention, illustrated in FIGS. 18-22, gas channels 47 may be placed within the electrolyte 28. By way of example, this may be accomplished by using ceramic sheets 128, where more than one sheet 128 makes the total electrolyte 28. For example, two sheets 128 each having a 50 nm thickness are placed together to create an electrolyte 28 of 100 nm thickness. Sacrificial gap-forming material 110 or wires/physical structures 42 can then be placed between the ceramic sheets 128 to form the gas channels 47, as depicted in schematic perspective view in FIG. 18. As described above, the gas channels 47 can be made by any method used to create the passages 14,15,20,21, i.e., printed or dispensed materials that will later decompose; fibers of an organic type; wires that can be pulled out, etc.

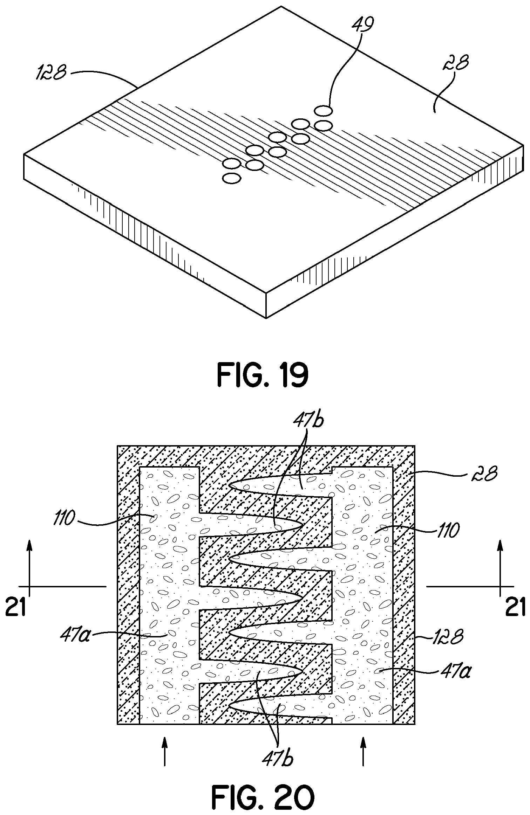

In addition, via holes 49 are placed in the ceramic sheet 128, as shown in schematic perspective view in FIG. 19, so that gas from a buried gas channel 47 can escape outward to the anode 24 or cathode 26. Thus, both air and fuel can be carried and emitted from channels 47 in the electrolyte 28. The via holes 49 can be created in any pattern desired, and they can be filled after they are formed so that the vias 49 don't collapse during lamination. The via holes 49 can be filled with sacrificial gap-forming material 110 so that they will be open after sinter, or they can be filled with porous material (such as YSZ, LSM, NiO, or others) so that they will allow gas to pass through.

Easily achievable dimensions for these features would be vias 49 of 0.0015" (38 µm) diameter and gas channels 47 of 0.001" or 0.0005" (25 µm or 13 µm) thickness and 0.002" (51 µm) width. Larger or smaller feature sizes can be made. Although some volume of the electrolyte 28 is lost to the gas channels 47 and vias 49, the resulting drop in power output will be the same or less than that volume drop. For example, if 10% of electrolyte volume is devoted to gas passages 47 and vias 49, then power loss will be 10% or less. The drop in power will be a reasonable tradeoff because this technique can increase both fuel utilization and power density (by allowing more layers in a given volume).

FIG. 19 depicts in perspective view a ceramic sheet 128 having a plurality of vias 49 formed therein. FIG. 20 depicts in top view a ceramic sheet 128 having sacrificial gap-forming material 110 printed or dispensed thereon in a pattern of alternating fingers that come together at each side to connect with large strips down the sides, which will form a pair of artery-type gas channels 47a for flow through the electrolyte 28 in the X direction and cross flow in the Y direction through the finger-shaped channels 47b. The pair of artery-type gas channels 47a and their respective finger-shaped channels 47b can serve the same electrode, i.e., two separate input pathways, or one of the channels 47a,47b can serve the adjacent anode 24 while the other one of the channels 47a,47b serves the adjacent cathode 26.

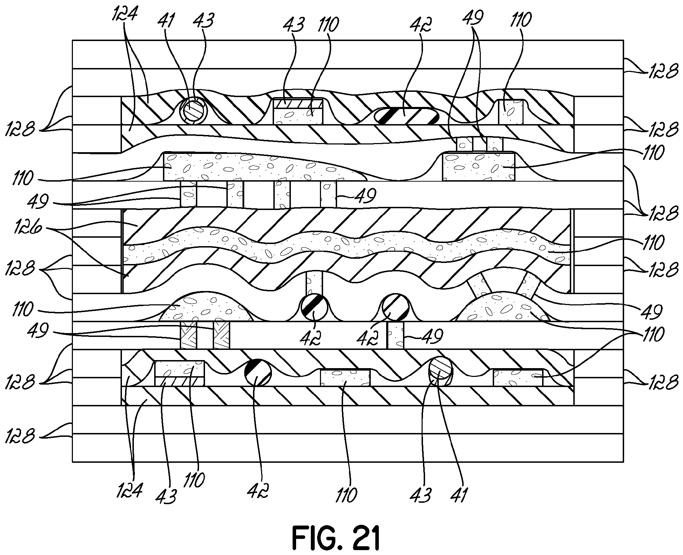

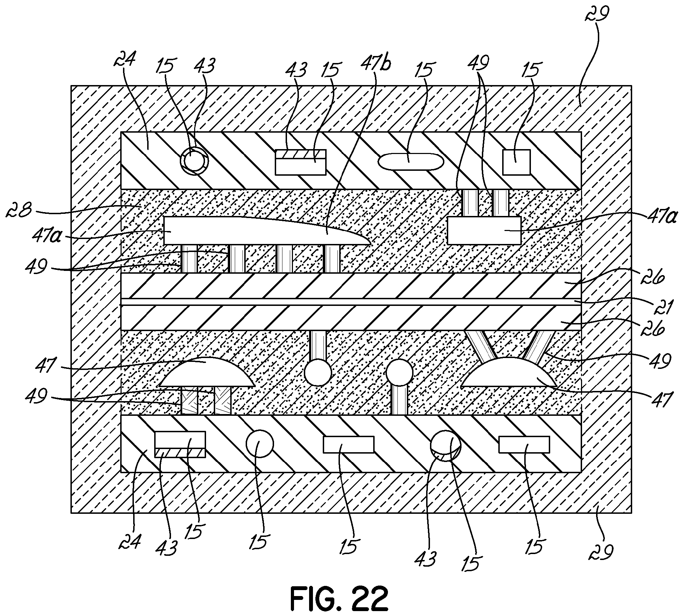

FIG. 21 illustrates schematically in cross-section the build-up of a device 10 using various of the embodiments described above, and FIG. 22 illustrates schematically in cross-section the resulting device 10 after lamination, bake-out and sintering. Ceramic sheets 128 are placed throughout the structure to form the electrolyte 28 and the supporting ceramic 29. Anode sheets 124 and cathode sheets 126 are used to create the anodes 24 and cathodes 26, but it may be appreciated that other techniques may be used, such as printing and depositing electrode material. Various shapes of sacrificial gap-forming material 110, wires 42 and fibers 41 are used to create the exhaust passages 15,21 and electrolyte gas channels 47, but the shapes and types of materials are not restricted to those illustrated. The vias 49 are shown filled during assembly in FIG. 21 and, depending on whether the fill material is sacrificial or a non-sacrificial porous material, the vias 49 are either open or filled in the resulting device 10 in FIG. 22.

Referring in more detail to FIGS. 21 and 22, top, bottom and side ceramic sheets 128 are placed to create the surrounding supporting ceramic 29. A pair of anode sheets 124 are placed near the bottom of the structure and near the top of the structure to form top and bottom anodes 24. Between the pair of anode sheets 124, different embodiments are illustrated for forming exhaust passages 15. Between the bottom pair of anode sheets 124, on the left side a conductor 43 is printed on the anode sheet 124 and a sacrificial gap-forming material 110 is printed on the conductor, whereas on the right side and middle, just the sacrificial gap-forming material 110 is printed or deposited. Therebetween, a wire 42 and a fiber 41 partially coated with conductor 43 as described in FIG. 13A are illustrated. Between the top pair of anode sheets 124, on the left side a fiber 41 fully coated with conductor 43 as shown in FIG. 12 is illustrated, next to which a sacrificial gap-forming material 110 is deposited with a conductor printed thereon. Also shown are a ribbon-shaped wire 42 and a square-dimensioned sacrificial gap-forming material 110. The resulting shaped passages 15 are illustrated in the anodes 24 of FIG. 22.

In the middle of the structure, a pair of cathode sheets 126 are placed with a sheet of sacrificial gap-forming material 110 therebetween to form a large pathway for the exhaust passage 21 that splits the cathode 26 into two spaced portions similar to FIG. 11B.

Between the bottom pair of anode sheets 124 and the pair of cathode sheets 126, a pair of ceramic sheets 128 are placed with sacrificial gap-forming material 110 deposited therebetween and wires 42 placed therebetween to form semi-circular and circular gas channels 47, respectively, as shown in FIG. 22, with two of the channels 47 serving the anode 24 below and two of the channels 47 serving the cathode 26 above by way of vias 49 formed in either the lower or upper ceramic sheet 128, respectively. A pair of ceramic sheets 128 are also placed between the top pair of anode sheets 124 and the pair of cathode sheets 126, with the lower ceramic sheet 128 being that depicted in FIG. 20 having the alternating finger pattern of sacrificial gap-forming material 110 deposited thereon, as shown in cross-section taken along line 21-21 in FIG. 20. As shown in FIG. 22, the left artery-type gas channel 47a and its respective finger-shaped channels 47b serve the cathode 26 below and the right artery-type gas channel 47a and its respective finger-shaped channels 47b (not visible) serve the anode 24 above.

Thus, FIG. 22 shows that the gas inlet paths are buried in the electrolyte 28, and the gas outlet paths are buried within the anode 24 and cathode 26, rather than both being buried within or at the surfaces of the anode 24 and cathode 26, as described in FIGS. 3A-17. FIG. 22 additionally shows that the electrolyte layer 28 can have multiple buried channels 47, with one set serving an adjacent anode 24 and the other set serving an adjacent cathode 26. The gas channels 47 in the electrolyte 28 serve the adjacent electrodes by vias 49 that can be filled for structural support during lamination, and which are either filled with porous material, such as porous LSM, or open in the final device 10 to permit the gas to flow through and into the pores of the adjacent electrode. The channels 47 can be formed by removal of a wire 42 or other physical structure, or can be formed by sacrificial gap-forming material 110 that can be printed or dispensed into or onto the electrolyte 28 and burned out after lamination. Any of the shapes and patterns described for the passages 14,15,20,21 can likewise be used for the gas channels 47, as illustrated by the different shapes in FIG. 22.

All of the embodiments described above can be integrated into the Fuel Cell Stick™ devices 10 (et al.) described in the published applications referenced above, including those having an elongate form in which the length is the dominant axis of thermal expansion and in which a portion of the elongate form containing the active structure is a hot zone portion and a non-active end portion is a cold zone portion. In addition to the Fuel Cell Stick™ devices 10 (et al.), the embodiments herein may also be useful in non-Fuel Cell Stick™ device designs, including conventional plate stack designs or other fuel cell designs. The invention has been described with particular reference to solid oxide fuel cells (SOFCs), but may also be applicable to other types of fuel cells, such as molten carbonate fuel cells (MCFCs).

While the invention has been illustrated by the description of one or more embodiments thereof, and while the embodiments have been described in considerable detail, additional advantages and modifications will readily appear to those skilled in the art.

## Claims

1. A fuel cell device comprising a solid ceramic support structure having at least one active cell therein comprising a first porous electrode (24) and a second porous electrode (26) separated by an electrolyte layer (28) that is monolithic with the solid ceramic support structure, with each of the first and second porous electrodes (24, 26) having a surface that forms an interface with the electrolyte layer (28), one or more first gas input passages (14), one or more second gas input passages (20), one or more first exhaust passages (15) spaced apart from the one or more first input passages (14), and one or more second exhaust passages (21) spaced apart from the one or more second input passages (20), wherein the one or more first gas input passages (14) extend within the first porous electrode (24), within the electrolyte layer (28), and/or at the surface that forms the interface between the first porous electrode (24) and the electrolyte layer (28), the one or more second gas input passages (20) extend within the second porous electrode (26), within the electrolyte layer (28), and/or at the surface that forms the interface between the second porous electrode (26) and the electrolyte layer (28), the one or more first exhaust passages (15) extend within the first porous electrode (24) and/or at a surface thereof opposite the surface that forms the interface with the electrolyte layer (28), and the one or more second exhaust passages (21) extend within the second porous electrode and/or at a surface thereof opposite the surface that forms the interface with the electrolyte layer, whereby gas flowpaths are formed such that gases flow from inlets (12, 18) in the solid ceramic support structure through the one or more first and second gas input passages (14, 20) to pores of the first and second porous electrodes (24, 26), then through the pores of the first and second porous electrodes (24, 26) to the one or more first and second exhaust passages (15, 21), and then through the one or more first and second exhaust passages (15, 21) to outlets (16, 22) in the solid ceramic support structure.

2. The fuel cell device of claim 1, wherein the one or more first gas input passages (14) extend within the first porous electrode (24) and/or at the surface thereof that forms the interface with the electrolyte layer (28), and the one or more second gas input passages (20) extend within the second porous electrode (26) and/or at the surface thereof that forms the interface with the electrolyte layer (28).

3. The fuel cell device of claim 2 wherein the one or more first and second gas input passages (14) extend within the respective first and second porous electrode (24, 26) adjacent the surface that forms the interface with the electrolyte layer (28) and the one or more first and second exhaust passages (15, 21) extend within the respective first and second porous electrode (24, 26) adjacent the surface opposite the interface with the electrolyte layer (28).

4. The fuel cell device of claim 2 wherein each of the one or more first and second exhaust passages (15, 21) are vertically spaced apart in a different X-Y plane from the respective one or more first and second gas input passages (14, 20) whereby the gases are adapted to flow in an X and/or Y direction through the one or more first and second gas input passages (14, 20), then in an essentially Z direction through the pores of the first and second porous electrodes (24, 26), and then in the X and/or Y direction through the one or more first and second exhaust passages (15, 21).

5. The fuel cell device of claim 2 wherein the one or more first and second exhaust passages (15, 21) are horizontally spaced apart in the same X-Y plane from the respective one or more first and second gas input passages (14, 20), wherein the gases are adapted to flow in the X and/or Y direction through the one or more first and second gas input passages (14, 20), then in the X and/or Y direction through the pores of the first and second porous electrodes (24, 26), and then in the X and/or Y direction through the one or more first and second exhaust passages (15, 21), and substantially without flow in a Z direction.

6. The fuel cell device of claim 2 having at least two active cells therein, wherein the first porous electrode (24) is shared by opposing second porous electrodes (26) and separated therefrom by respective electrolyte layers (28), and wherein the one or more first gas input passages (14, 20) are positioned within the first porous electrode (24) at or near both interfaces with the respective electrolyte layers (28) and the one or more first exhaust passages (15, 21) are positioned therebetween at or near the center of the first porous electrode (24).

7. The fuel cell device of claim 6 wherein the one or more second gas input passages (14, 20) are positioned within the opposing second porous electrodes (26) at or near both interfaces with the respective electrolyte layers (28) and the one or more second exhaust passages (15, 21) are positioned within the second porous electrodes (26) at or near the surfaces thereof opposite the surfaces that form the interfaces with the respective electrolyte layers (28).

8. The fuel cell device of claim 1, wherein the one or more first gas input passages (14, 20) extend within the electrolyte layer (28) and are fluidicly coupled to the first porous electrode (24) by a plurality of first vias (49), and wherein the one or more second gas input passages (14, 20) extend within the electrolyte layer (28) and are fluidicly coupled to the second porous electrode (26) by a plurality of second vias (49).

9. The fuel cell device of claim 8 having at least two active cells therein, wherein the first porous electrode (24) is shared by opposing second porous electrodes (26) and separated therefrom by respective electrolyte layers (28), and wherein both of the one or more first and second gas input passages (14, 20) extend within each of the electrolyte layers (28) and the one or more first exhaust passages (15, 21) are positioned at or near the center of the first porous electrode (24).

10. The fuel cell device of claim 9 wherein the one or more second exhaust passages (15, 21) are positioned within the second porous electrodes (26) at or near the surfaces thereof opposite the surfaces that form the interfaces with the respective electrolyte layers (28).

11. The fuel cell device of claim 9 wherein the one or more second exhaust passages (15, 21) are positioned within the second porous electrodes (26) at or near the centers of the second porous electrodes (26).

12. The fuel cell device of claim 1 having a plurality of active cells therein stacked vertically in a Z direction and extending in an X and/or Y direction, wherein adjacent active cells share one of the first and second porous electrodes (24, 26) whereby each of the first and second porous electrodes (24, 26) have at least one surface that forms an interface with adjacent electrolyte layers (28), wherein the one or more first gas input passages (14, 20) extend within each of the electrolyte layers (28) and are fluidicly coupled to each adjacent first porous electrode (24) by a plurality of first vias (49), the one or more second gas input passages (14, 20) extend within each of the electrolyte layers (28) and fluidicly coupled to each adjacent second porous electrode (26) by a plurality of second vias (49), and the one or more first and second exhaust passages (15, 21) extend within each respective first and second porous electrode (24, 26) at or near a center thereof, whereby the gas flowpaths are formed such that gases flow from inlets (12, 18) in the solid ceramic support structure through the one or more first and second gas input passages (14, 20) in the X and/or Y direction in the electrolyte layers (28), then through the first and second vias (49) in essentially the Z direction to pores of the first and second porous electrodes (24, 26), then through the pores of the first and second porous electrodes (24, 26) in essentially the Z direction to the one or more first and second exhaust passages (15, 21), and then through the one or more first and second exhaust passages (15, 21) in the X and/or Y direction to outlets (16, 22) in the solid ceramic support structure.

13. The fuel cell device of claim 1 having a plurality of active cells therein stacked vertically in a Z direction and extending in an X and/or Y direction, wherein adjacent active cells share one of the first and second porous electrodes (24, 26) whereby each of the first and second porous electrodes (24, 26) have at least one surface that forms an interface with adjacent electrolyte layers (28), wherein the one or more first and second gas input passages (14, 20) extend within each of the first and second porous electrodes (24, 26) and/or at the surfaces that form interfaces between the first and second porous electrodes (24, 26) and the adjacent electrolyte layer (28), and the one or more first and second exhaust passages (15, 21) extend within each of the first and second porous electrodes (24, 26) at or near the center thereof and/or at surfaces thereof not forming the interfaces with the adjacent electrolyte layers (28), whereby gas flowpaths are formed such that gases flow from inlets (12, 18) in the solid ceramic support structure through the one or more first and second gas input passages (14, 20) in the X and/or Y direction to pores of the first and second porous electrodes (24, 26), then through the pores of the first and second porous electrodes (24, 26)in essentially the Z direction to the one or more first and second exhaust passages (15, 21), and then through the one or more first and second exhaust passages (15, 21) in the X and/or Y direction to outlets (16, 22) in the solid ceramic support structure.

14. The fuel cell device of any preceding claim further comprising a coating of conductive material in the one or more first gas input passages (14), the one or more second gas input passages (20), the one or more first exhaust passages (15) and/or the one or more second exhaust passages (21) adapted to serve as a current collector, wherein the conductive material is porous to allow gas to flow through pores therein to or from the respective first or second electrode (24, 26) and/or the coating only partially coats the passages to allow gas to flow directly to or from the respective first or second electrode (24, 26).

15. The fuel cell device of any preceding claim wherein the one or more first and second gas input passages (14, 21) narrow as they progress into the solid ceramic support structure from the inlets (12, 18).

## Patentansprüche

1. Brennstoffzellenvorrichtung, umfassend eine vollkeramische Trägerstruktur mit wenigstens einer aktiven Zelle darin, umfassend eine erste poröse Elektrode (24) und eine zweite poröse Elektrode (26), getrennt durch eine Elektrolytschicht (28), die mit der vollkeramischen Trägerstruktur monolithisch ist, wobei die erste und die zweite poröse Elektrode (24, 26) jeweils eine Oberfläche haben, die eine Grenzfläche mit der Elektrolytschicht (28) bildet, einen oder mehrere erste Gaseingangskanäle (14), einen oder mehrere zweite Gaseingangskanäle (20), einen oder mehrere erste Auslasskanäle (15), die von den ein oder mehreren ersten Eingangskanälen (14) beabstandet sind, und einen oder mehrere zweite Auslasskanäle (21), die von den ein oder mehreren zweiten Eingangskanälen (20) beabstandet sind, wobei die ein oder mehreren Gaseingangskanäle (14) in der ersten porösen Elektrode (24), in der Elektrolytschicht (28) und/oder an der Oberfläche verlaufen, die die Grenzfläche zwischen der ersten porösen Elektrode (24) und der Elektrolytschicht (28) bildet, die ein oder mehreren zweiten Gaseingangskanäle (20) innerhalb der zweiten porösen Elektrode (26), in der Elektrolytschicht (28) und/oder an der Oberfläche verlaufen, die die Grenzfläche zwischen der zweiten porösen Elektrode (26) und der Elektrolytschicht (28) bildet, die ein oder mehreren ersten Auslasskanäle (15) in der ersten porösen Elektrode (24) und/oder an einer Oberfläche davon gegenüber der Oberfläche verlaufen, die die Grenzfläche mit der Elektrolytschicht (28) bildet, und die ein oder mehreren zweiten Auslasskanäle (21) in der zweiten porösen Elektrode und/oder an einer Oberfläche davon gegenüber der Oberfläche verlaufen, die die Grenzfläche mit der Elektrolytschicht bildet, so dass Gasstrombahnen gebildet werden, so dass Gase von Einlässen (12, 18) in der vollkeramischen Trägerstruktur durch die ein oder mehreren ersten und zweiten Gaseingangskanäle (14, 20) zu Poren der ersten und zweiten porösen Elektrode (24, 26), dann durch die Poren der ersten und zweiten porösen Elektrode (24, 26) zu den ein oder mehreren ersten und zweiten Auslasskanälen (15, 21) und dann durch die ein oder mehreren ersten und zweiten Auslasskanäle (15, 21) zu Auslässen (16, 22) in der vollkeramischen Trägerstruktur fließen.

2. Brennstoffzellenvorrichtung nach Anspruch 1, wobei die ein oder mehreren ersten Gaseingangskanäle (14) in der ersten porösen Elektrode (24) und/oder an der Oberfläche davon verlaufen, die die Grenzfläche mit der Elektrolytschicht (28) bildet, und die ein oder mehreren zweiten Gaseingangskanäle (20) in der zweiten porösen Elektrode (26) und/oder an der Oberfläche davon verlaufen, die die Grenzfläche mit der Elektrolytschicht (28) bildet.

3. Brennstoffzellenvorrichtung nach Anspruch 2, wobei die ein oder mehreren ersten und zweiten Gaseingangskanäle (14) in der jeweiligen ersten und zweiten porösen Elektrode (24, 26) neben der Oberfläche verlaufen, die die Grenzfläche mit der Elektrolytschicht (28) bildet, und die ein oder mehreren ersten und zweiten Ausgangskanäle (15, 21) in der jeweiligen ersten und zweiten porösen Elektrode (24, 26) neben der Oberfläche gegenüber der Grenzfläche mit der Elektrolytschicht (28) verlaufen.

4. Brennstoffzellenvorrichtung nach Anspruch 2, wobei jeder der ein oder mehreren ersten und zweiten Auslasskanäle (15, 21) vertikal in einer anderen X-Y-Ebene von den jeweiligen ein oder mehreren ersten und zweiten Gaseingangskanälen (14, 20) beabstandet sind, so dass die Gase so adaptiert werden, dass sie in einer X- und/oder Y-Richtung durch die ein oder mehreren ersten und zweiten Gaseingangskanäle (14, 20), dann im Wesentlichen in einer Z-Richtung durch die Poren der ersten und zweiten porösen Elektrode (24, 26) und dann in der X- und/oder Y-Richtung durch die ein oder mehreren ersten und zweiten Auslasskanäle (15, 21) fließen.

5. Brennstoffzellenvorrichtung nach Anspruch 2, wobei die ein oder mehreren ersten und zweiten Auslasskanäle (15, 21) horizontal in derselben X-Y-Ebene von den jeweiligen ein oder mehreren ersten und zweiten Gaseingangskanälen (14, 20) beabstandet sind, wobei die Gase so adaptiert sind, dass sie in der X- und/oder Y-Richtung durch die ein oder mehreren ersten und zweiten Gaseingangskanäle (14, 20), dann in der X- und/oder Y-Richtung durch die Poren der ersten und zweiten porösen Elektrode (24, 26) und dann in der X- und/oder Y-Richtung durch die ein oder mehreren ersten und zweiten Auslasskanäle (15, 21) und im Wesentlichen ohne Fluß in einer Z-Richtung fließen.

6. Brennstoffzellenvorrichtung nach Anspruch 2 mit wenigstens zwei aktiven Zellen darin, wobei die erste poröse Elektrode (24) von gegenüberliegenden zweiten porösen Elektroden (26) und durch jeweilige Elektrolytschichten (28) davon getrennt gemeinsam genutzt werden und wobei die ein oder mehreren ersten Gaseingangskanäle (14, 20) in der ersten porösen Elektrode (24) an oder nahe beiden Grenzflächen mit den jeweiligen Elektrolytschichten (28) positioniert sind und die ein oder mehreren ersten Auslasskanäle (15, 21) dazwischen an oder nahe der Mitte der ersten porösen Elektrode (24) positioniert sind.

7. Brennstoffzellenvorrichtung nach Anspruch 6, wobei die ein oder mehreren zweiten Gaseingangskanäle (14, 20) in den gegenüberliegenden zweiten porösen Elektroden (26) an oder nahe beiden Grenzflächen mit den jeweiligen Elektrolytschichten (28) positioniert sind und die ein oder mehreren zweiten Auslasskanäle (15, 21) in den zweiten porösen Elektroden (26) an oder nahe den Oberflächen davon gegenüber den Oberflächen positioniert sind, die die Grenzflächen mit den jeweiligen Elektrolytschichten (28) bilden.

8. Brennstoffzellenvorrichtung nach Anspruch 1, wobei die ein oder mehreren ersten Gaseingangskanäle (14, 20) in der Elektrolytschicht (28) verlaufen und fluidisch mit der ersten porösen Elektrode (24) durch eine Mehrzahl von ersten Durchkontaktierungen (49) gekoppelt sind, und wobei die ein oder mehreren zweiten Gaseingangskanäle (14, 20) in der Elektrolytschicht (28) verlaufen und fluidisch mit der zweiten porösen Elektrode (26) durch eine Mehrzahl von zweiten Durchkontaktierungen (49) gekoppelt sind.

9. Brennstoffzellenvorrichtung nach Anspruch 8 mit wenigstens zwei aktiven Zellen darin, wobei die erste poröse Elektrode (24) von gegenüberliegenden zweiten porösen Elektroden (26) und davon durch jeweilige Elektrolytschichten (28) getrennt gemeinsam genutzt werden und wobei beide der ein oder mehreren ersten und zweiten Gaseingangskanäle (14, 20) in jeder der Elektrolytschichten (28) verlaufen und die ein oder mehreren ersten Auslasskanäle (15, 21) an oder nahe der Mitte der ersten porösen Elektrode (24) positioniert sind.

10. Brennstoffzellenvorrichtung nach Anspruch 9, wobei die ein oder mehreren zweiten Auslasskanäle (15, 21) in den zweiten porösen Elektroden (26) an oder nahe den Oberflächen davon gegenüber den Oberflächen positioniert sind, die die Grenzflächen mit den jeweiligen Elektrolytschichten (28) bilden.

11. Brennstoffzellenvorrichtung nach Anspruch 9, wobei die ein oder mehreren zweiten Auslasskanäle (15, 21) in den zweiten porösen Elektroden (26) an oder nahe den Mitten der zweiten porösen Elektroden (26) positioniert sind.

12. Brennstoffzellenvorrichtung nach Anspruch 1 mit einer Mehrzahl von aktiven Zellen darin, die vertikal in einer Z-Richtung gestapelt sind und in einer X- und/oder Y-Richtung verlaufen, wobei benachbarte aktive Zellen eine der ersten und zweiten porösen Elektroden (24, 26) gemeinsam nutzen, so dass jede der ersten und zweiten porösen Elektroden (24, 26) wenigstens eine Oberfläche hat, die eine Grenzfläche mit benachbarten Elektrolytschichten (28) bildet, wobei die ein oder mehreren ersten Gaseingangskanäle (14, 20) in jeder der Elektrolytschichten (28) verlaufen und fluidisch mit jeder benachbarten ersten porösen Elektrode (24) durch eine Mehrzahl von ersten Durchkontaktierungen (49) gekoppelt sind, die ein oder mehreren zweiten Gaseingangskanäle (14, 20) in jeder der Elektrolytschichten (28) verlaufen und fluidisch mit jeder benachbarten zweiten porösen Elektrode (26) durch eine Mehrzahl von zweiten Durchkontaktierungen (49) gekoppelt sind, und die ein oder mehreren ersten und zweiten Auslasskanäle (15, 21) in jeder jeweiligen ersten und zweiten porösen Elektrode (24, 26) an oder nahe einer Mitte davon verlaufen, so dass die Gasstrombahnen gebildet werden, so dass Gase von Einlässen (12, 18) in der vollkeramischen Trägerstruktur durch die ein oder mehreren ersten und zweiten Gaseingangskanäle (14, 20) in der X- und/oder Y-Richtung in den Elektrolytschichten (28), dann durch die erste und zweite Durchkontaktierung (49) im Wesentlichen in der Z-Richtung zu Poren der ersten und zweiten porösen Elektroden (24, 26), dann durch die Poren der ersten und zweiten porösen Elektroden (24, 26) im Wesentlichen in der Z-Richtung zu den ein oder mehreren ersten und zweiten Auslasskanälen (15, 21) und dann durch die ein oder mehreren ersten und zweiten Auslasskanäle (15, 21) in der X- und/oder Y-Richtung zu Auslässen (16, 22) in der vollkeramischen Trägerstruktur fließen.

13. Brennstoffzellenvorrichtung nach Anspruch 1 mit einer Mehrzahl von aktiven Zellen darin, die vertikal in einer Z-Richtung gestapelt sind und in einer X- und/oder Y-Richtung verlaufen, wobei benachbarte aktive Zellen eine der ersten und zweiten porösen Elektroden (24, 26) gemeinsam nutzen, so dass jede der ersten und zweiten porösen Elektroden (24, 26) wenigstens eine Oberfläche hat, die eine Grenzfläche mit benachbarten Elektrolytschichten (28) bildet, wobei die ein oder mehreren ersten und zweiten Gaseingangskanäle (14, 20) in jeder der ersten und zweiten porösen Elektroden (24, 26) und/oder an den Oberflächen verlaufen, die Grenzflächen zwischen der ersten und zweiten porösen Elektrode (24, 26) und der benachbarten Elektrolytschicht (28) bilden, und die ein oder mehreren ersten und zweiten Auslasskanäle (15, 21) in jeder der ersten und zweiten porösen Elektroden (24, 26) an oder nahe der Mitte davon und/oder an Oberflächen davon verlaufen, die keine Grenzflächen mit den benachbarten Elektrolytschichten (28) bilden, so dass Gasstrombahnen gebildet werden, so dass Gase von Einlässen (12, 18) in der vollkeramischen Trägerstruktur durch die ein oder mehreren ersten und zweiten Gaseingangskanäle (14, 20) in der X- und/oder Y-Richtung zu Poren der ersten und zweiten porösen Elektroden (24, 26), dann durch die Poren der ersten und zweiten porösen Elektroden (24, 26) im Wesentlichen in der Z-Richtung zu den ein oder mehreren ersten und zweiten Auslasskanälen (15, 21) und dann durch die ein oder mehreren ersten und zweiten Auslasskanäle (15, 21) in der X- und/oder Y-Richtung zu Auslässen (16, 22) in der vollkeramischen Trägerstruktur fließen.

14. Brennstoffzellenvorrichtung nach einem vorherigen Anspruch, die eine Beschichtung aus leitfähigem Material in den ein oder mehreren ersten Gaseingangskanälen (14), den ein oder mehreren zweiten Gaseingangskanälen (20), den ein oder mehreren Gasauslasskanälen (15) und/oder den ein oder mehreren zweiten Gasauslasskanälen (21) umfassen, so ausgelegt, dass sie als Stromkollektor dienen, wobei das leitfähige Material porös ist, damit Gas durch Poren darin zu oder von der jeweiligen ersten oder zweiten Elektrode (24, 26) fließen kann und/oder die Beschichtung die Kanäle nur teilweise beschichtet, so dass Gas direkt zu oder von der jeweiligen ersten oder zweiten Elektrode (24, 26) fließen kann.

15. Brennstoffzellenvorrichtung nach einem vorherigen Anspruch, wobei sich die ein oder mehreren ersten und zweiten Gaseingangskanäle (14, 21) bei ihrem Fortschritt in die vollkeramische Trägerstruktur von den Einlässen (12, 18) verengen.

## Revendications

1. Dispositif de pile à combustible comprenant une structure de support céramique solide comportant au moins une cellule active comprenant une première électrode poreuse (24) et une seconde électrode poreuse (26) séparées par une couche d'électrolyte (28) qui est monolithique avec la structure de support céramique solide, chacune des première et seconde électrodes poreuses (24, 26) présentant une surface qui forme une interface avec la couche d'électrolyte (28), un ou plusieurs premiers passages d'entrée de gaz (14), un ou plusieurs seconds passages d'entrée de gaz (20), un ou plusieurs premiers passages d'échappement (15) espacés des un ou premiers passages d'entrée (14), et un ou plusieurs seconds passages d'échappement (21) espacés des un ou plusieurs seconds passages d'entrée (20), dans lequel les un ou plusieurs premiers passages d'entrée de gaz (14) s'étendent entre la première électrode poreuse (24), au sein de la couche d'électrolyte (28), et/ou au niveau de la surface qui forme l'interface entre la première électrode poreuse (24) et la couche d'électrolyte (28), les un ou plusieurs seconds passages d'entrée de gaz (20) s'étendent au sein de la seconde électrode poreuse (26), au sein de la couche d'électrolyte (28), et/ou au niveau de la surface qui forme l'interface entre la seconde électrode poreuse (26) et la couche d'électrolyte (28), les un ou plusieurs premiers passages d'échappement (15) s'étendent au sein de la première électrode poreuse (24) et/ou au niveau d'une surface de celle-ci opposée à la surface qui forme l'interface avec la couche d'électrolyte (28), et les un ou plusieurs seconds passages d'échappement (21) s'étendent au sein de la seconde électrode poreuse et/ou au niveau d'une surface de celle-ci opposée à la surface qui forme l'interface avec la couche d'électrolyte, moyennant quoi des chemins d'écoulement de gaz sont formés de telle sorte que des gaz s'écoulent depuis des admissions (12, 18) dans la structure de support céramique solide à travers les un ou plusieurs premiers et seconds passages d'entrée de gaz (14, 20) jusqu'à des pores des première et seconde électrodes poreuses (24, 26), puis à travers les pores des première et seconde électrodes poreuses (24, 26) jusqu'aux un ou plusieurs premiers et seconds passages d'échappement (15, 21), puis à travers les un ou plusieurs premiers et seconds passages d'échappement (15, 21) jusqu'à des sorties (16, 22) dans la structure de support céramique solide.

2. Dispositif de pile à combustible selon la revendication 1, dans lequel les un ou plusieurs premiers passages d'entrée de gaz (14) s'étendent au sein de la première électrode poreuse (24) et/ou au niveau de la surface de celle-ci qui forme l'interface avec la couche d'électrolyte (28), et les un ou plusieurs seconds passages d'entrée de gaz (20) s'étendent au sein de la seconde électrode poreuse (26) et/ou au niveau de la surface de celle-ci qui forme l'interface avec la couche d'électrolyte (28).

3. Dispositif de pile à combustible selon la revendication 2 dans lequel les un ou plusieurs premiers et seconds passages d'entrée de gaz (14) s'étendent au sein des première et seconde électrodes poreuses respectives (24, 26) adjacents à la surface qui forme l'interface avec la couche d'électrolyte (28) et les un ou plusieurs premiers et seconds passages d'échappement (15, 21) s'étendent au sein des première et seconde électrodes poreuses respectives (24, 26) adjacents à la surface opposée à l'interface avec la couche d'électrolyte (28).

4. Dispositif de pile à combustible selon la revendication 2 dans lequel chacun des un ou plusieurs premiers et seconds passages d'échappement (15, 21) est espacé verticalement dans un plan X-Y différent des un ou plusieurs premiers et seconds passages d'entrée de gaz (14, 20) respectifs moyennant quoi les gaz sont adaptés pour s'écouler dans un sens X et/ou Y à travers les un ou plusieurs premiers et seconds passages d'entrée de gaz (14, 20), puis essentiellement dans un sens Z à travers les pores des première et seconde électrodes poreuses (24, 26), puis dans le sens X et/ou le sens Y à travers les un ou plusieurs premiers et seconds passages d'échappement (15, 21).

5. Dispositif de pile à combustible selon la revendication 2 dans lequel les un ou plusieurs premiers et seconds passages d'échappement (15, 21) sont espacés horizontalement dans le même plan X-Y depuis les un ou plusieurs premiers et seconds passages d'entrée de gaz (14, 20) respectifs, dans lequel les gaz sont adaptés pour s'écouler dans le sens X et/ou Y à travers les un ou plusieurs premiers et seconds passages d'entrée de gaz (14, 20), puis dans le sens X et/ou le sens Y à travers les pores des première et seconde électrodes poreuses (24, 26), puis dans le sens X et/ou le sens Y à travers les un ou plusieurs premiers et seconds passages d'échappement (15, 21), et ne s'écoulant sensiblement pas dans un sens Z.

6. Dispositif de pile à combustible selon la revendication 2 comportant au moins deux cellules actives, dans lequel la première électrode poreuse (24) est partagée par des secondes électrodes poreuses opposées (26) et séparée de celles-ci par des couches d'électrolyte respectives (28), et dans lequel les un ou plusieurs premiers passages d'entrée de gaz (14, 20) sont positionnés au sein de la première électrode poreuse (24) au niveau ou près des deux interfaces avec les couches d'électrolyte respectives (28) et les un ou plusieurs premiers passages d'échappement (15, 21) sont positionnés entre elles au centre ou près du centre de la première électrode poreuse (24).

7. Dispositif de pile à combustible selon la revendication 6 dans lequel les un ou plusieurs seconds passages d'entrée de gaz (14, 20) sont positionnés au sein des secondes électrodes poreuses opposées (26) au niveau ou près des deux interfaces avec les couches d'électrolyte respectives (28) et les un ou plusieurs seconds passages d'échappement (15, 21) sont positionnés au sein des secondes électrodes poreuses (26) au niveau ou près des surfaces de celles-ci opposées aux surfaces qui forment les interfaces avec les couches d'électrolyte respectives (28).

8. Dispositif de pile à combustible selon la revendication 1, dans lequel les un ou plusieurs premiers passages d'entrée de gaz (14, 20) s'étendent au sein de la couche d'électrolyte (28) et sont couplés fluidiquement à la première électrode poreuse (24) par une pluralité de premières vias (49), et dans lequel les un ou plusieurs seconds passages d'entrée de gaz (14, 20) s'étendent au sein de la couche d'électrolyte (28) et sont couplés fluidiquement à la seconde électrode poreuse (26) par une pluralité de secondes vias (49).

9. Dispositif de pile à combustible selon la revendication 8 comportant au moins deux cellules actives, dans lequel la première électrode poreuse (24) est partagée par des secondes électrodes poreuses opposées (26) et séparée de celles-ci par des couches d'électrolyte respectives (28), et dans lequel à la fois les un ou plusieurs premiers et seconds passages d'entrée de gaz (14, 20) s'étendent au sein de chacune des couches d'électrolyte (28) et les un ou plusieurs premiers passages d'échappement (15, 21) sont positionnés au centre ou près du centre de la première électrode poreuse (24).

10. Dispositif de pile à combustible selon la revendication 9 dans lequel les un ou plusieurs seconds passages d'échappement (15, 21) sont positionnés au sein de la seconde électrode poreuses (26) au niveau ou près des surfaces de celle-ci opposées aux surfaces qui forment les interfaces avec les couches d'électrolyte respectives (28).

11. Dispositif de pile à combustible selon la revendication 9 dans lequel les un ou plusieurs seconds passages d'échappement (15, 21) sont positionnés au sein des secondes électrodes poreuses (26) aux centres ou près des centres des secondes électrodes poreuses (26).

12. Dispositif de pile à combustible selon la revendication 1 comportant une pluralité de cellules actives empilées verticalement dans un sens Z et s'étendant dans un sens X et/ou Y, dans lequel des cellules actives adjacentes partagent l'une des première et seconde électrodes poreuses (24, 26) moyennant quoi chacune des première et seconde électrodes poreuses (24, 26) présente au moins une surface qui forme une interface avec des couches d'électrolyte adjacentes (28), dans lequel les un ou plusieurs premiers passages d'entrée de gaz (14, 20) s'étendent au sein de chacune des couches d'électrolyte (28) et sont couplés fluidiquement à chaque première électrode poreuse adjacente (24) par une pluralité de premières vias (49), les un ou plusieurs seconds passages d'entrée de gaz (14, 20) s'étendent au sein de chacune des couches d'électrolyte (28) et sont couplés fluidiquement à chaque seconde électrode poreuse adjacente (26) par une pluralité de secondes vias (49), et les un ou plusieurs premiers et seconds passages d'échappement (15, 21) s'étendent au sein de chaque première et seconde électrode poreuse respective (24, 26) à un centre ou près d'un centre de celle-ci, moyennant quoi les chemins d'écoulement de gaz sont formés de telle sorte que les gaz s'écoulent depuis des admissions (12, 18) dans la structure de support céramique solide à travers les un ou plusieurs premiers et seconds passages d'entrée de gaz (14, 20) dans le sens X et/ou Y dans les couches d'électrolyte (28), puis à travers les premières et secondes vias (49) essentiellement dans le sens Z vers des pores des première et seconde électrodes poreuses (24, 26), puis à travers les pores des première et seconde électrodes poreuses (24, 26) essentiellement dans le sens Z vers les un ou plusieurs premiers et seconds passages d'échappement (15, 21), puis à travers les un ou plusieurs premiers et seconds passages d'échappement (15, 21) dans le sens X et/ou Y vers des sorties (16, 22) dans la structure de support céramique solide.

13. Dispositif de pile à combustible selon la revendication 1 comportant une pluralité de cellules actives empilées verticalement dans un sens Z et s'étendant dans un sens X et/ou un sens Y, dans lequel des cellules actives adjacentes partagent l'une des première et seconde électrodes poreuses (24, 26) moyennant quoi chacune des première et seconde électrodes poreuses (24, 26) présente au moins une surface qui forme une interface avec des couches d'électrolyte adjacentes (28), dans lequel les un ou plusieurs premiers et seconds passages d'entrée de gaz (14, 20) s'étendent au sein de chacune des première et seconde électrodes poreuses (24, 26) et/ou au niveau des surfaces qui forment des interfaces entre les première et seconde électrodes poreuses (24, 26) et la couche d'électrolyte adjacente (28), et les un ou plusieurs premiers et seconds passages d'échappement (15, 21) s'étendent au sein de chacune des première et seconde électrodes poreuses (24, 26) au centre ou près du centre de celle-ci et/ou au niveau de surfaces de celle-ci ne formant pas les interfaces avec les couches d'électrolyte adjacentes (28), moyennant quoi des chemins d'écoulement de gaz sont formés de telle sorte que les gaz s'écoulent depuis des admissions (12, 18) dans la structure de support céramique solide à travers les un ou plusieurs premiers et seconds passages d'entrée de gaz (14, 20) dans le sens X et/ou Y vers des pores des première et seconde électrodes poreuses (24, 26), puis à travers les pores des première et seconde électrodes poreuses (24, 26) essentiellement dans le sens Z vers les un ou plusieurs premiers et seconds passages d'échappement (15, 21), puis à travers les un ou plusieurs premiers et seconds passages d'échappement (15, 21) dans le sens X et/ou Y vers des sorties (16, 22) dans la structure de support céramique solide.

14. Dispositif de pile à combustible selon n'importe quelle revendication précédente comprenant en outre un revêtement de matériau conducteur dans les un ou plusieurs premiers passages d'entrée de gaz (14), les un ou plusieurs seconds passages d'entrée de gaz (20), les un ou plusieurs premiers passages d'échappement (15) et/ou les un ou plusieurs seconds passages d'échappement (21) adapté pour faire office de collecteur de courant, dans lequel le matériau conducteur est poreux pour permettre l'écoulement de gaz à travers des pores de celui-ci vers ou depuis la première ou seconde électrode respective (24, 26) et/ou le revêtement ne revêt que partiellement les passages pour permettre l'écoulement direct du gaz vers ou depuis la première ou seconde électrode respective (24, 26).

15. Dispositif de pile à combustible selon n'importe quelle revendication précédente dans lequel les un ou plusieurs premiers et seconds passages d'entrée de gaz (14, 21) rétrécissent au fur et à mesure qu'ils avancent dans la structure de support céramique solide depuis les admissions (12, 18).
